# EUROPÄISCHE PATENTSCHRIFT

(11) **EP 1 293 117 B1**
(45) Veröffentlichungstag und Bekanntmachung des Hinweises auf die Patenterteilung: **19.10.2005**
(21) Anmeldenummer: 02016145.1
(22) Anmeldetag: 20.07.2002
(51) Int. Cl.: A01F 15/08, A01B 71/06

(54) **Verfahren zum Festsetzen eines oder mehrerer Arbeitsaggregate eines landwirtschaftlichen Gerätes oder einer selbstfahrenden Arbeitsmaschine**
Method to stop one or more working tools of an agricultural machine or a self propelled working machine
Méthode pour arrêter un ou plusieurs organes de travail d'une machine agricole ou une machine de travail autopropulsée

(30) Priorität: 14.09.2001 DE 10145407
(43) Veröffentlichungstag der Anmeldung: 19.03.2003
(73) Patentinhaber: GKN Walterscheid GmbH, 53797 Lohmar (DE)
(72) Erfinder: Coenen, Karl, 53721 Siegburg (DE)
(74) Vertreter: Harwardt, Günther

(56) Entgegenhaltungen:
- EP-A- 0 715 088
- EP-A- 1 004 234
- GB-A- 2 013 462
- GB-A- 2 161 574
- US-A- 5 927 453
- US-B1- 6 173 225

## Beschreibung

Die Erfindung betrifft ein Verfahren zum Festsetzen eines oder mehrerer Arbeitsaggregate eines landwirtschaftlichen Gerätes oder einer selbstfahrenden Arbeitsmaschine in einer Notsituation mittels einer Antriebsanordnung in einem Antriebsstrang, der von einem Antriebsaggregat antreibbar ist.

Bekannte landwirtschaftliche Geräte oder selbstfahrende Arbeitsmaschinen, wie zum Beispiel Pressen, Mähwerke oder Erntemaschinen, weisen Arbeitsaggregate auf, die von einem Antriebsaggregat, in der Regel einer Verbrennungsmaschine, angetrieben sind. Im Antriebsstrang zwischen dem Antriebsaggregat und dem Arbeitsaggregat ist eine Überlastkupplung vorgesehen, damit bei einer Überlastung eine Beschädigung des Arbeitsaggregats verhindert wird. Als Überlastkupplungen kommen formschlüssige Überlastkupplungen in Form von Scherbolzenkupplungen, kraftschlüssige Überlastkupplungen in Form von Sperrkörperkupplungen sowie reibschlüssige Überlastkupplungen zur Anwendung. Eine solche Vorrichtung ist aus dem Dokument GB2013462, das dem Oberbegriff des Anspruchs 1 entspricht, bekannt.

Die bei landwirtschaftlichen Geräten und selbstfahrenden Arbeitsmaschinen anzutreibenden Massen der Arbeitsaggregate sind in der Regel sehr hoch, so dass bei einem Ansprechen der Überlastkupplung die trägen Massen des Arbeitsaggregats noch lange Zeit nachlaufen und somit eine Gefahrenquelle für das Bedienpersonal darstellen oder eine Beschädigung des Arbeitsaggregats hervorgerufen werden kann.

Aufgabe der vorliegenden Erfindung ist es, ein eingangs genanntes Verfahren bereit zu stellen, bei dem das Antriebsaggregat beim Festsetzen des Arbeitsaggregats vor Überlastungen geschützt ist und ein möglichst schnelles Abstoppen des Arbeitsaggregats erzielt wird.

Die Aufgabe wird erfindungsgemäß durch ein Verfahren zum Festsetzen eines oder mehrerer Arbeitsaggregate eines landwirtschaftlichen Gerätes oder einer selbstfahrenden Arbeitsmaschine mittels einer Antriebsanordnung in einem Antriebsstrang, der von einem Antriebsaggregat antreibbar ist, welche
- eine Überlastkupplung, die einerseits antriebsmäßig mit dem Antriebsaggregat verbindbar ist und von diesem in einer Antriebsdrehrichtung antreibbar ist und andererseits antriebsmäßig mit dem Arbeitsaggregat verbindbar ist,
- eine Bremseinheit,
   - die antriebsmäßig mit der Überlastkupplung verbunden ist und
   - die zur Anordnung im Antriebstrang zwischen der Überlastkupplung und dem Arbeitsaggregat bestimmt ist sowie
- Betätigungsmittel zum Betätigen der Bremseinheit aufweist,
wobei bei laufendem Arbeitsaggregat die Bremseinheit mittels der Betätigungsmittel betätigt, das Arbeitsaggregat abgebremst sowie festgesetzt und daraufhin die Überlastkupplung ausgekuppelt wird,
gelöst.

Somit lassen sich die hohen nachlaufenden Massen des Arbeitsaggregats abbremsen und festsetzten, so dass diese für das Bedienpersonal keine Gefahr mehr darstellen. Durch die Anordnung der Bremseinheit zwischen der Überlastkupplung und dem Arbeitsaggregat kann die Bremseinheit auch bei laufendem Antriebsaggregat betätigt werden, wobei die Überlastkupplung aufgrund des abgebremsten Arbeitsaggregats auskuppelt und der Kraftfluss unterbrochen wird.

Die Bremseinheit kann als Scheibenbremse mit zumindest einer Bremsscheibe und Bremsbacken ausgestaltet sein. Ebenso können die Bremsmittel durch eine Trommelbremse oder einer Lamellenkupplung mit mehreren Reiblamellen dargestellt sein.

Bevorzugt werden die Betätigungsmittel manuell betätigt. Die manuellen Betätigungsmittel können zum Beispiel in Form eines Not-Aus-Schalters dargestellt sein, mit dem das Arbeitsaggregat in einer Notfallsituation manuell gestoppt werden kann.

Es ist möglich, dass das Eindringen von Fremdkörpern in den Arbeitsbereich des landwirtschaftlichen Geräts oder der selbstfahrenden Arbeitsmaschine oder in den Arbeitsbereich der Arbeitsaggregats durch Sensoren der Betätigungsmittel erkannt wird und die Bremseinheit daraufhin automatisch betätigt wird. Die Betätigungsmittel können manuell betätigbare Mittel zum Lösen der Bremseinheit umfassen.

Somit kann die Bremseinheit automatisch gebremst werden, wenn eine Person in den Arbeitsbereich gelangt oder wenn ein Gegenstand in den Arbeitsbereich des Gerätes oder der Maschine gelangt, der unter Umständen Beschädigungen des Gerätes oder der Maschine hervorrufen kann. Die manuell betätigbaren Mittel zum Lösen der Bremseinheit können in der Fahrerkabine angeordnet sein, so dass die Bremseinheit nur dann wieder gelöst werden kann, wenn sich der Fahrer nicht mehr im Arbeitsbereich aufhält.

Bei den Sensoren kann es sich zum Beispiel um optische Sensoren zur optischen Überwachung des Arbeitsbereichs des Geräts oder der Maschine handelt. Ferner können zum Beispiel elektronische Sensoren vorgesehen sein, die das Öffnen einer Geräteklappe oder -haube ermitteln.

Es kann vorgesehen sein, dass die Bremseinheit durch Federmittel zu einer gebremsten Position beaufschlagt ist und dass die Betätigungsmittel beim Lösen der Bremseinheit diese entgegen der Federkraft der Federmittel zu einer ungebremsten Position beaufschlagen.

Somit ist gewährleistet, dass die Bremseinheit durch die Federmittel stets zur gebremsten Position beaufschlagt ist. Erst durch aktive Betätigung der Betätigungsmittel ist es möglich, die Bremseinheit zu lösen.

Ferner kann vorgesehen sein, dass die Betätigungsmittel elektrische, hydraulische oder pneumatische Mittel zum Beaufschlagen der Bremseinheit entgegen der Federkraft der Federmittel beim Lösen der Bremseinheit umfassen.

Hierdurch lässt sich die Bremseinheit nur dann lösen, wenn das landwirtschaftliche Gerät oder die selbstfahrende Arbeitsmaschine in Betrieb ist und elektrische, hydraulische oder pneumatische Energie zur Verfügung steht. Bei einem Ausfall der Energiequelle oder nach Abschalten des Antriebsaggregats wird die Bremseinheit automatisch durch die Federmittel gebremst.

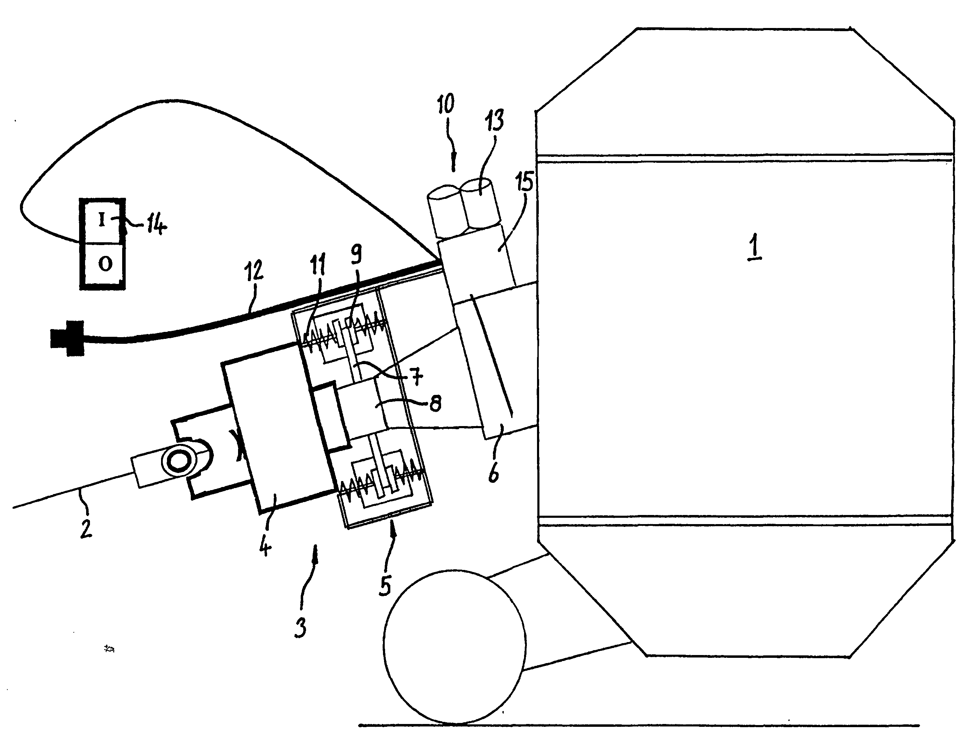

Ein bevorzugtes Ausführungsbeispiel ist anhand der Zeichnung näher erläutert.

Die Figur zeigt ein landwirtschaftliches Gerät 1, dass von einem Traktor oder Schlepper gezogen und angetrieben wird. Ein Antriebsstrang zum Antreiben des landwirtschaftlichen Geräts 1 umfasst eine Gelenkwelle 2, die einerseits mit einer Zapfwelle des Traktors und andererseits mit einer Antriebsanordnung 3 des Antriebsstrangs verbunden ist. Die Antriebsanordnung 3 umfasst eine Überlastkupplung 4 zum Beispiel in Form einer formschlüssigen, kraftschlüssigen oder reibschlüssigen Überlastkupplung. Die Überlastkupplung 4 ist einerseits mit der Gelenkwelle 2 und andererseits mit einer Bremseinheit 5 verbunden. Die Bremseinheit 5 ist wiederum antriebsmäßig mit einem Arbeitsaggregat 6 des landwirtschaftlichen Geräts 1 verbunden. Somit können Antriebsdrehmomente von der Zapfwelle des Traktors über die Gelenkwelle 2, die Überlastkupplung 4 und die Bremseinheit 5 zum Arbeitsaggregat 6 übertragen werden.

Die Bremseinheit 5 umfasst eine Bremsscheibe 7, welche drehfest mit einer Antriebswelle 8 verbunden ist. Ferner umfasst die Bremseinheit 7 Bremsbacken 9, mit denen die Bremsscheibe 7 und damit die Antriebswelle 8 abgebremst werden können.

Zum Betätigen der Bremseinheit 5 sind Betätigungsmittel 10 vorgesehen, die Federmittel 11 umfassen, die die Bremsbacken 9 in Richtung zur Bremsscheibe 7 und somit die Bremseinheit 5 zu einer gebremsten Position beaufschlagen. Über eine Hydraulikleitung 12 sind die Betätigungsmittel 10 mit einer hydraulischen Druckquelle verbunden. Mittels Hydraulikzylinder lassen sich die Bremsbacken 9 von der Bremsscheibe 7 lösen und somit die Bremseinheit 4 in eine ungebremste Position überführen. Mittels eines Notausschalters 13 kann die Druckmittelzuführung zu den Hydraulikzylindern unterbrochen werden, so dass die Federmittel 11 die Bremsbacken 9 an die Bremsscheibe 7 pressen und somit Antriebswelle 8 abbremsen und stillsetzen. Somit wird ferner das Arbeitsaggregat 6 abgebremst und stillgesetzt. Zum Lösen der Bremseinheit 5 ist ein elektrischer Schalter 14 vorgesehen, der ein hydraulisches Ventil 15 betätigt, so dass die Hydraulikzylinder wieder mit Druck beaufschlagt sind und die Bremseinheit 5 gelöst wird.

Bei dem landwirtschaftlichen Gerät 1 kann es sich zum Beispiel um ein Mähwerk, einen Ladewagen oder eine Presse handeln. Ebenso ist es möglich, dass es sich um einen Antriebsstrang für eine selbstfahrende Arbeitsmaschine wie zum Beispiel eine Erntemaschine handelt. Neben dem Not-Aus-Schalter 13 können die Betätigungsmittel 10 auch Sensoren umfassen, die den Arbeitsbereich des Arbeitsaggregats 6 oder des gesamten landwirtschaftlichen Geräts 1 überwachen und die Bremseinheit betätigen, sofern sich Fremdkörper oder Personen in dem Arbeitsbereich befinden. Der Schalter 14 zum Lösen der Bremseinheit 5 sollte aus Sicherheitsgründen in der Fahrerkabine vorgesehen sein, so dass die Bremseinheit 5 erst dann wieder zu lösen ist, wenn der Fahrer sich von dem landwirtschaftlichen Gerät 1 entfernt hat.

Durch die Anordnung der Federmittel 11 ist gewährleistet, dass bei abgestellter Druckquelle, das heißt dann, wenn ein Antriebsaggregat zum Antreiben des landwirtschaftlichen Geräts 1 abgeschaltet ist, die Bremseinheit 5 in der gebremsten Position gehalten ist.

### Bezugszeichenliste

- 1: landwirtschaftliches Gerät
- 2: Gelenkwelle
- 3: Antriebsanordnung
- 4: Überlastkupplung
- 5: Bremseinheit
- 6: Arbeitsaggregat
- 7: Bremsscheibe
- 8: Antriebswelle
- 9: Bremsbacke
- 10: Betätigungsmittel
- 11: Federmittel
- 12: Hydraulikleitung
- 13: Not-Aus-Schalter
- 14: Schalter
- 15: Ventil

## Patentansprüche

1. Verfahren zum Festsetzen eines oder mehrerer Arbeitsaggregate (6) eines landwirtschaftlichen Gerätes (1) oder einer selbstfahrenden Arbeitsmaschine mittels einer Antriebsanordnung in einem Antriebsstrang, der von einem Antriebsaggregat antreibbar ist, welche
- eine Überlastkupplung (4), die einerseits antriebsmäßig mit dem Antriebsaggregat verbindbar ist und von diesem in einer Antriebsdrehrichtung antreibbar ist und andererseits antriebsmäßig mit dem Arbeitsaggregat (6) verbindbar ist,
- eine Bremseinheit (5),
- die antriebsmäßig mit der Überlastkupplung (4) verbunden ist und
- die zur Anordnung im Antriebsstrang zwischen der Ü-berlastkupplung (4) und dem Arbeitsaggregat (6) bestimmt ist sowie
- Betätigungsmittel (10) zum Betätigen der Bremseinheit (5) aufweist,
**dadurch gekennzeichnet,**
**dass** bei laufendem Arbeitsaggregat die Bremseinheit (5) mittels der Betätigungsmittel (10) betätigt, das Arbeitsaggregat (6) abgebremst sowie festgesetzt und daraufhin die Überlastkupplung (4) ausgekuppelt wird.

2. Verfahren nach Anspruch 1,
**dadurch gekennzeichnet,**
**dass** die Betätigungsmittel (10) manuell betätigt werden.

3. Verfahren nach Anspruch 1,
**dadurch gekennzeichnet,**
**dass** das Eindringen von Fremdkörpern in den Arbeitsbereich des landwirtschaftlichen Geräts (1) oder der selbstfahrenden Arbeitsmaschine oder in den Arbeitsbereich der Arbeitsaggregats (6) durch Sensoren erkannt wird und die Bremseinheit (5) bei Erkennen von Fremdkörpern automatisch betätigt wird.

## Claims

1. A method of stopping one or more working tools (6) of an agricultural implement (1) or of a self-propelled working machine by means of a drive assembly in a driveline which can be driven by a driving unit, which driving assembly comprises
- an overload coupling (4) which, on the one hand, can be connected to the driving unit in respect of drive and which can be driven by said driving unit in a driving direction of rotation and which, on the other hand, can be connected to the working tool (6) in respect of drive;
- a brake unit (5)
- which, in respect of drive, is connected to the overload coupling (4) and
- which is provided to be arranged in the driveline between the overload coupling (4) and the working tool (6), as well as
- actuating means (10) for actuating the brake unit (5),
**characterised in**
**that**, with a running working tool, the brake unit (5) is actuated by the actuating means (10), that the working tool (6) is braked and stopped and that, thereafter, the overload coupling (4) is disconnected.

2. A method according to claim 1,
**characterised in**
**that** the actuating means (10) are actuated manually.

3. A method according to claim 1,
**characterised in**
**that** the ingress of foreign bodies into the operating range of the agricultural implement (1) or of the self-propelled working machine or into the operating range of the working tool (6) is identified by sensors and that, upon the identification of foreign bodies, the brake unit (5) is actuated automatically.

## Revendications

1. Procédé pour arrêter ou immobiliser un ou plusieurs organes de travail (6) d'un outil ou appareil agricole (1) ou d'une machine de travail automotrice, au moyen d'un agencement de transmission d'entraînement dans une ligne de transmission d'entraînement, qui peut être entraîné par un groupe d'entraînement, et qui comprend,
- un accouplement de surcharge (4) qui, d'une part peut être relié sur le plan de l'entraînement avec le groupe d'entraînement, et peut être entraîné par celui-ci dans un sens de rotation d'entraînement, et d'autre part peut être relié sur le plan de l'entraînement avec l'organe de travail (6),
- une unité de freinage (5)
- qui, sur le plan de l'entraînement est reliée à l'accouplement de surcharge (4), et
- qui est prévu pour être disposé dans la ligne de transmission d'entraînement entre l'accouplement de surcharge (4) et l'organe de travail (6),
- ainsi que des moyens d'actionnement (10) destinés à actionner l'unité de freinage (5),
**caractérisé en ce que** lorsque l'organe de travail est en marche, l'unité de freinage (5) est actionnée à l'aide des moyens d'actionnement (10), l'organe de travail (6) est freiné ainsi qu'arrêté ou immobilisé, et l'accouplement de surcharge (4) est ensuite désaccouplé.

2. Procédé selon la revendication 1, **caractérisé en ce que** les moyens d'actionnement (10) sont actionnés manuellement.

3. Procédé selon la revendication 1, **caractérisé en ce que** la pénétration de corps étrangers dans la zone de travail de l'outil ou de l'appareil agricole (1) ou de la machine de travail automotrice, ou dans la zone de travail de l'organe de travail (6), est détectée par des capteurs, et l'unité de freinage (5) est actionnée automatiquement en cas de détection de corps étrangers.
